# EUROPEAN PATENT SPECIFICATION

(11) **EP 2 473 028 B1**
(45) Date of publication and mention of the grant of the patent: **14.08.2013**
(21) Application number: 10739868.7
(22) Date of filing: 28.07.2010
(51) Int. Cl.: A01J 25/00

(54) **A CURD KNEADING APPARATUS FOR PRODUCTION OF PASTA-FILATA CHEESE**
QUARKKNETVORRICHTUNG ZUR HERSTELLUNG VON PASTA-FILATA-KÄSE
APPAREIL DE PÉTRISSAGE DU CAILLÉ UTILISABLE EN VUE DE LA PRODUCTION DE FROMAGE À PÂTE FILÉE

(30) Priority: 02.09.2009 IT TO20090675
(43) Date of publication of application: 11.07.2012
(73) Proprietor: CMT Costruzioni Meccaniche e Tecnologia S.p.A., 12016 Peveragno CN (IT)
(72) Inventor: TOMATIS, Stefano, 12016 Peveragno CN (IT)
(74) Representative: Spandonari, Carlo
(86) International application number: PCT/EP2010/004608
(87) International publication number: WO 2011/026542

(56) References cited:
- EP-A2- 0 146 765
- EP-A2- 1 175 826
- US-A- 3 193 927
- US-A- 4 182 232

## Description

The present invention relates to a curd kneading apparatus for production of pasta-filata cheese.

In the production of pasta-filata cheese, the curd is made plastic or "stringy" by heating it up to a temperature of at least 60 °C, typically by mixing the curd with hot water. Thereafter, the stringy curd is kneaded in order to obtain a fibrous paste, which is then broken into globes or cylinders which are successively hardened by cooling.

The kneading process is generally carried out by a machine in which the curd, after being minced, is loaded into a kneading chamber into which hot water is also fed. Plunging arms operating in the kneading chamber mix and stretch the paste growing up by the mix of curd and hot water. The paste produced in the kneading chamber is progressively fed to subsequent molding operations, while the water in excess is drained from the kneading chamber through a draining hole.

However, with the above process, the water-soluble nutritive substances, such as fat, albumine or glucose, which are generally contained in small percentages in the curd to be kneaded, inevitably dissolve in the hot water used during the kneading process. Therefore, the water drained from the kneading chamber through the draining hole contains these substances, which are consequently lost, thereby resulting in a reduction of the production yield. Moreover, the water to be disposed must be firstly skimmed, in order to recover the above substances, and then purified so that it can be discharged without incurring environmental pollution problems, which operations introduce considerable complications in the process.

Another drawback of the above machine provided with plunging arms is that a considerable power is required to heat the water, which water is used in high percentages (two parts of water per each part of paste), with consequent rise in the production costs.

With other types of known machines, attempts have been made to knead the curd by augers. However, such known machines had a discountinous operation and, consequently, a low production yield.

Therefore, it is a main object of the invention to provide a curd-kneading apparatus which is capable of producing all types of pasta-filata cheese with a desired moisture degree, generally in the range 45% to 65%, without losing the water used in the kneading process, so that all the nutritive substances are retained in the paste and, at the same time, potentially polluting process wastes are eliminated.

It is another object of the invention to provide a kneading apparatus which is capable of operating continuosly in such a way as to increase the productivity and the production yield.

The above objects and other aims and advantages, which will better appear from the following description, are achieved by a curd-kneading apparatus for production of pasta-filata cheese having the features recited in claim 1, while the dependent claims state other advantageous, though secondary, features of the invention.

The invention will be now described in more detail with reference to a preferred, non-exclusive embodiment shown by way of non-limiting example in the attached drawings, wherein:
Fig. 1 is a broken-away view in side elevation of the kneading apparatus according to the invention;
Fig. 2 is a view in cross-section of the apparatus of Fig. 1 along line II-II, shown in a greatly enlarged scale;
Fig. 3 is a view in cross-section of the apparatus of Fig. 1 along line III-III, shown in a greatly enlarged scale.

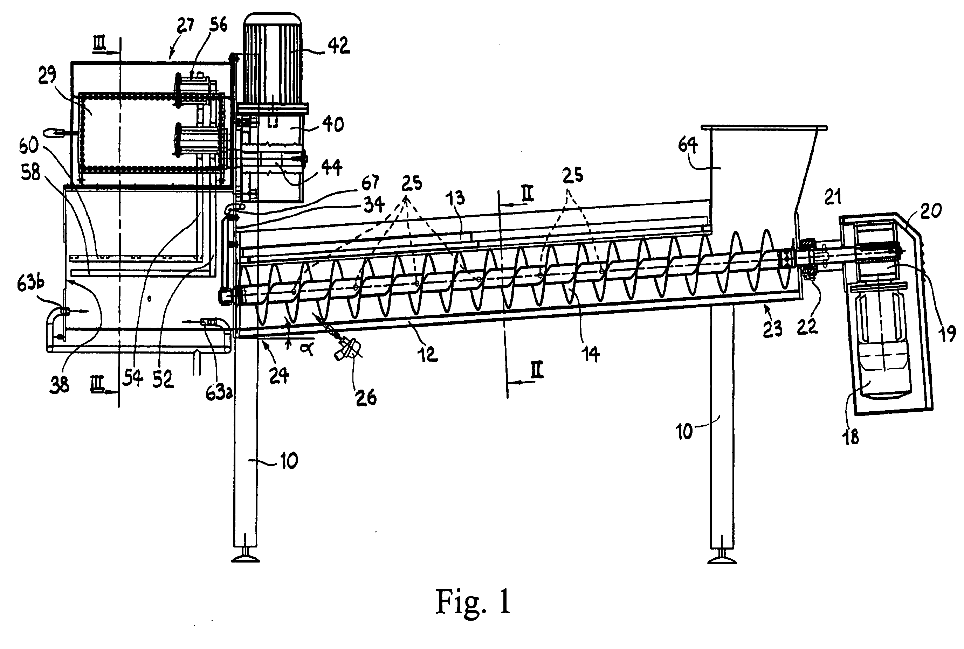

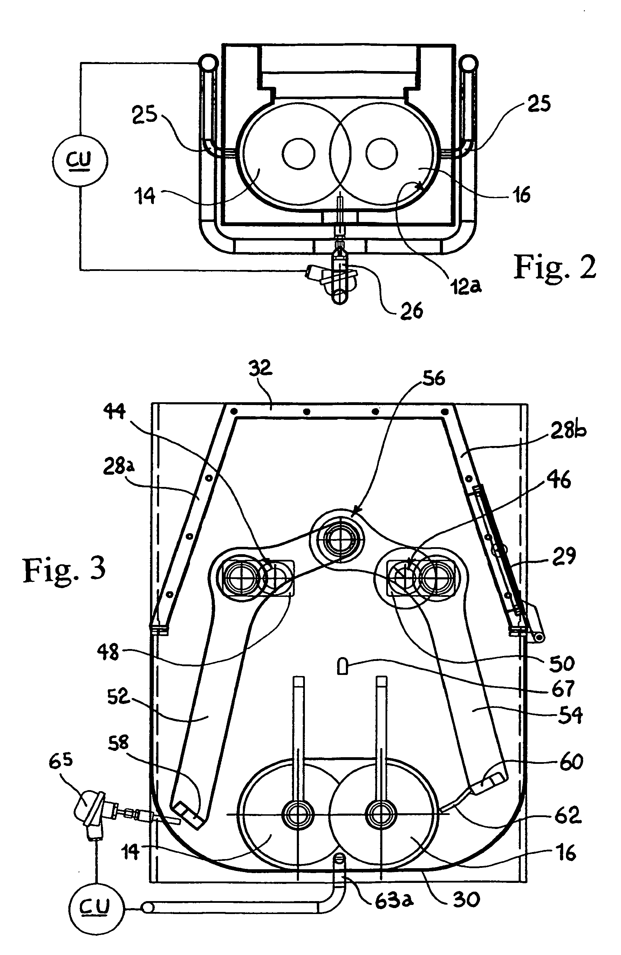

With reference to Figs. 1 to 3, the kneading apparatus according to the invention comprises a frame provided with columns such as 10 which support a kneading channel 12 closed by a removable cover 13. A pair of parallel augers 14, 16 are arranged side-by-side in the channel and have their screw profiles wound in opposite directions and partially inserted into each other (Figs. 2, 3). As shown in detail in Fig. 2, the inner wall 12a of channel 12 is shaped such that it surrounds the external profile of augers 14, 16. Augers 14, 16 are driven to rotate in opposite directions by a motor 18 provided with a reduction unit 19, both of which are covered by a carter 20, via a mechanical transmission 21 provided with conventional sealing means 22.

As shown in Fig. 1, channel 12 with augers 14, 16 housed therein are sligthly slanting downwards from an upstream inlet end 23 of channel 12 to a downstream outlet end 24 thereof, at an angle which is advantageously in the range 2° to 10°, preferably 4°. Each of the opposite side walls of channel 12 has an array of stem injectors 25 (Fig. 2) connectable to a stem source (not shown). Preferably, each array comprises six injectors 25 which are equally spaced along the respective wall of channel 12. The injectors are connected to a pneumatic needle valve (not shown) which is operable to enable/disable the feeding of stem into the channel. A temperature sensor 26 is also installed in channel 12 (Fig. 2) for measuring the temperature therein.

The downstream end 24 of channel 12 leads to a kneading chamber 27 having two side walls 28a, 28b, one of which, 28a, is provided with an openable inspection window 29, an U-shaped bottom wall 30, an upper wall 32, a rear wall 34 and a front wall 36 having an outlet mouth 38.

Two horizontal, parallel spindles 44, 46 are housed in the kneading chamber and are driven by a reduction gear 40, which is anchored to rear wall 34 and is driven a motor 42, to rotate in opposite directions at a predetermined speed. Two short cranks 48, 50 projecting from spindles 44, 46 are hinged to respective bent arms 52, 54 at intermediate positions thereof. The arms are longitudinally offset from each other, and are hinged to each other at their upper ends in 56. Accordingly, arms 52, 54 cooperate with cranks 48, 50 to form a linkage which drives the lower ends of the arms along specular orbital paths. Parallel shoves 58, 60 project at rigth angles from the lower ends of the two arms 52, 54 into the kneading chamber 26 in the direction facing away from channel 12, and substantially engage the whole length of chamber 27. Arms 52, 54 differ from each other in their vertical size to prevent shoves 58, 60 from interfering with each other during their orbital movement. Shove 60 preferably has a few transversal comb-like tines 62 (Fig. 2).

Two steam injectors 63a, 63b (Figs. 1, 3), which are identical to injectors 25 in channel 12, are respectively mounted on rear wall 34 and front wall 36 of chamber 27. Steam injectors 63a, 63b are connectable to the above-cited steam source and are controlled by a central unit CU on the basis of a second temperature sensor 65. A hot water feeding duct 67 leading to chamber 27 is connectable to a hot water source (not shown) which, if required, may be occasionally enabled to feed small amounts of hot water into the chamber, depending on the circumstances.

Channel 12 is loaded with curd (which has been previously minced, e.g., by a conventional blade mincer, not shown), at its upstream end 22 via a substantially vertical loading duct 64.

The operation of the augers and of the steam injectors is preferably controlled by control unit CU on the basis of the information received from the temperature sensors (which is only diagrammatically shown in Figs. 2, 3) in a way known to a person skilled in the art.

The above-described apparatus operates as follows. Minced curd is loaded into channel 12 via duct 64. Augers 14, 16, by rotating in opposite directions, progressively convey the curd towards outlet end 24 of the channel and, at the same time, apply a preliminary kneading action upon the curd, mainly by compression. At this stage, injectors 25 feed steam into channel 12, thereby causing the curd to progressively heat and become stringy, i.e., plastic. Since the steam is absorbed more easily by the paste then the water, this steam-based heating system considerably reduces the amount of water released by the paste in the channel, with consequent increase in the production yield. Moreover, due to the inclination of channel 12, any released water flows downstream by gravity rather than stagnating in the first portion of channel 12 (with consequent accumulation to be drained). This circumstance favours the uniform absorption of water by the paste under processing in channel 12. Preferably, the injection of steam is automatically controlled by control unit CU on the basis of the signal received by temperature sensor 26, in a way that will be obvious to the person skilled in the art.

Any fraction of water which is not absorbed by the paste in channel 12 flows into kneading chamber 27, wherein the paste, after the partial kneading action received by the augers, is subjected to a further kneading action. Plunging arms 52, 54, unlike the augers which mainly act by compression, lift and stretch the paste while further steam is fed by injectors 63a, 63b, always on the basis of the signal received by temperature sensor 65. If required, the degree of humidity of the paste can be further increased by supplying small amounts of hot water via duct 67.

By adjusting the amount of steam and water (from duct 67) supplied during the kneading process, a pasta-filata with a desired degree of humidity, substantially in the range 45% to 65%, can be obtained. In the practice, it has been found that the pasta-filata produced with the apparatus of the invention retains all the kneading water, so that no drainage is required. Moreover, the apparatus of the invention is also advantageous from the point of view of the power consumption because the steam-based heating system does not required to heat great amounts of water, which water, in the known machines, was largely lost.

It is evident from the description that the apparatus of the invention achieves the declared scope of producing a soft, moist paste-filata without drainage of water, with consequent increase in the production yield and in the quality of the product. Furthermore, the above-described apparatus is capable of operating continuosly becase the paste fed to chamber 27 has been already kneaded by the augers and, therefore, just a finishing kneading is required which can be carried out without interrupting the feeding of paste.

Of course, the above-described preferred embodiment of a kneading apparatus according to the invention can be largely changed. For instance, the number and the arrangement of plunging arms and steam injectors in channel 12 and in chamber 27 can be varied. Moreover, the steam injectors can have any known structure suited to perform the required function. Furthermore, a plurality of kneading chambers with plunging arms can be arranged in series downstream of the channel.

## Claims

1. A curd kneading apparatus, **characterized in that** it comprises:
- a kneading channel (12) slanting downwards from an upstream inlet end (23), which is open to receive curd to be kneaded, to a downstream outlet end (24), which is open to unload said curd,
- a pair of opposed augers (14, 16) which are pivotally supported side-by-side within the kneading channel (12) and are operatively connected to motor means (18) for rotating in opposite directions and moving said curd from said upstream end (23) to said downstream end (24),
- first steam blowing means (25) open to said kneading channel (12),
- at least one kneading chamber (27) with plunger arms, which is arranged at the outlet end of said kneading channel (12) for receiving the curd unloaded therefrom.

2. The apparatus of claim 1, **characterized in that** said channel (12) is slanting at an angle (a) in the range 2° to 10°.

3. The apparatus of claim 2, **characterized in that** said angle (a) is 4°.

4. The apparatus of any of claims 1 to 3, **characterized in that** said first steam blowing means comprise, on each one of the opposite sides of the channel (12), an array of injectors (25) which are connectable to a steam source and are operable to enable/disable the steam injection into the channel (12).

5. The apparatus of claim 4, **characterized in that** each array comprises six of said steam injectors aligned along the respective side of the channel.

6. The apparatus of claim 4 or 5, **characterized in that** it comprises a first temperature sensor (26) which is arranged to detect the temperature in said channel (12) and is connected to a control unit (CU) programmed to command said injectors as a function of the temperature detected by said first temperature sensor (26).

7. The apparatus of any of claims 1 to 6, **characterized in that** it comprises second steam blowing means (63a, 63b) which are open to said kneading chamber (27), are connectable to a steam source and are operable to enable/disable the injection of steam into the chamber (27).

8. The apparatus of claim 7, **characterized in that** it comprises a second temperature sensor (65) which is arranged to detect the temperature in said kneading chamber (27) and is connected to a control unit (CU) programmed to command said second steam blowing means (63a, 63b) as a function of the temperature detected by said second temperature sensor (65).

## Patentansprüche

1. Quarkknetvorrichtung, **dadurch gekennzeichnet, dass** sie aufweist:
- einen Knetkanal (12), der von einem stromaufwärtigen Einlassende (23), welches offen ist, um zu knetenden Quark aufzunehmen, abwärts geneigt zu einem stromabwärtigen Auslassende (24) verläuft, welches offen ist, um den Quark abzugeben,
- ein Paar entgegengesetzter Schnecken (14, 16), die schwenkbar nebeneinander in dem Knetkanal (12) gelagert und betriebsfähig mit einer Motoreinrichtung (18) zum Drehen in entgegengesetzte Richtungen und Bewegen des Quarks von dem stromaufwärtigen Ende (23) zum stromabwärtigen Ende (24) verbunden sind,
- eine erste Dampfeinblaseinrichtung (25), die zum Knetkanal (12) offen ist,
- mindestens eine Knetkammer (27) mit Drückarmen, die am Auslassende des Knetkanals (12) zum Empfangen des daraus abgegebenen Quarks angeordnet ist.

2. Vorrichtung nach Anspruch 1, **dadurch gekennzeichnet, dass** der Kanal (12) in einem Winkel (a) im Bereich von 2° bis 10° geneigt ist.

3. Vorrichtung nach Anspruch 2, **dadurch gekennzeichnet, dass** der Winkel (a) 4° beträgt.

4. Vorrichtung nach einem der Ansprüche 1 bis 3, **dadurch gekennzeichnet, dass** die erste Dampfeinblaseinrichtung auf jeder der entgegengesetzten Seiten des Kanals (12) eine Anordnung von Einspritzdüsen (25) aufweist, die mit einer Dampfquelle verbindbar und dazu betreibbar sind, die Dampfeinspritzung in den Kanal (12) einzuschalten/auszuschalten.

5. Vorrichtung nach Anspruch 4, **dadurch gekennzeichnet, dass** jede Anordnung sechs der Dampfeinspritzdüsen entlang der entsprechenden Seite des Kanals aufgereiht umfasst.

6. Vorrichtung nach Anspruch 4 oder 5, **dadurch gekennzeichnet, dass** sie einen ersten Temperatursensor (26) umfasst, der dazu angeordnet ist, die Temperatur im Kanal (12) zu erfassen, und mit einer Steuereinheit (CU) verbunden ist, welche dazu programmiert ist, die Einspritzdüsen als eine Funktion der von dem ersten Temperatursensor (26) erfassten Temperatur anzusteuern.

7. Vorrichtung nach einem der Ansprüche 1 bis 6, **dadurch gekennzeichnet, dass** sie zweite Dampfeinblaseinrichtungen (63a, 63b) aufweist, die zu der Knetkammer (27) offen sind, mit einer Dampfquelle verbindbar sind und zum Einschalten/Ausschalten der Einspritzung von Dampf in die Kammer (27) betreibbar sind.

8. Vorrichtung nach Anspruch 7, **dadurch gekennzeichnet, dass** sie einen zweiten Temperatursensor (65) aufweist, der dazu angeordnet ist, die Temperatur in der Knetkammer (27) zu erfassen, und mit einer Steuereinheit (CU) verbunden ist, welche dazu programmiert ist, die zweiten Dampfeinblaseinrichtungen (63a, 63b) als eine Funktion der von dem zweiten Temperatursensor (65) erfassten Temperatur anzusteuern.

## Revendications

1. Appareil pour le malaxage du caillé, **caractérisé en ce qu'**il comprend:
- un canal de malaxage (12) incliné vers le bas à partir d'une extrémité d'entrée en amont (23) qui est ouverte pour recevoir le caillé à malaxer, jusqu'à une extrémité de sortie en aval (24) qui est ouverte pour évacuer ledit caillé ;
- une paire de vis sans fin opposées (14, 16) qui sont supportées en pivotement côte à côte au sein du canal de malaxage (12) et qui sont raccordées de manière opérante à un moyen (18) faisant office de moteur pour la mise en rotation dans des directions opposées et le déplacement dudit caillé à partir de ladite extrémité en amont (23) jusqu'à ladite extrémité en aval (24) ;
- un premier moyen de soufflage de vapeur (25) ouvert sur ledit canal de malaxage (12) ;
- au moins une chambre de malaxage (27) comprenant des bras de plongeur, qui est arrangée à l'extrémité de sortie dudit canal de malaxage (12) pour la réception du caillé qui en est évacué.

2. Appareil selon la revendication 1, **caractérisé en ce que** ledit canal (12) est incliné en formant un angle (a) dans la plage de 2° à 10°.

3. Appareil selon la revendication 2, **caractérisé en ce que** ledit angle (a) s'élève à 4°.

4. Appareil selon l'une quelconque des revendications 1 à 3, **caractérisé en ce que** ledit premier moyen de soufflage de vapeur comprend, sur chacun des côtés opposés du canal (12), une série d'injecteurs (25) qui peuvent être raccordés à une source de vapeur et qui peuvent être mis en service pour activer/désactiver l'injection de vapeur dans le canal (12).

5. Appareil selon la revendication 4, **caractérisé en ce que** chaque série comprend six injecteurs de vapeur de ce type qui sont disposés en alignement le long du côté respectif du canal.

6. Appareil selon la revendication 4 ou 5, **caractérisé en ce qu'**elle comprend un premier capteur de température (26) qui est arrangé pour détecter la température régnant dans ledit canal (12) et qui est raccordé à une unité de commande (CU) programmée pour commander lesdits injecteurs en fonction de la température détectée par ledit premier capteur de température (26).

7. Appareil selon l'une quelconque des revendications 1 à 6, **caractérisé en ce qu'**il comprend des deuxièmes moyens de soufflage de vapeurs (63a, 63b) qui sont ouverts sur ladite chambre de malaxage (27), qui peuvent être raccordés à une source de vapeur et qui peuvent être mis en service pour activer/désactiver l'injection de vapeur dans la chambre (27).

8. Appareil selon la revendication 7, **caractérisé en ce qu'**il comprend un deuxième capteur de température (65) qui est arrangé pour détecter la température régnant dans ladite chambre de malaxage (27) et qui est raccordé à une unité de commande (CU) programmée pour commander lesdits deuxièmes moyens de soufflage (63a, 63b) en fonction de la température détectée par ledit deuxième capteur de température (65).
